Europäisches Patentamt

European Patent Office

Office européen des brevets

(19)

(11) Numéro de publication: **0 170 567**

**A1**

(12) ## DEMANDE DE BREVET EUROPEEN

(21) Numéro de dépôt: **85401314.1**

(22) Date de dépôt: **28.06.85**

(51) Int. Cl.⁴: **B 01 D 53/36**

(30) Priorité: **06.07.84 FR 8410777**

(43) Date de publication de la demande:
**05.02.86 Bulletin 86/6**

(84) Etats contractants désignés:
**BE DE FR GB IT NL**

(71) Demandeur: **SEB S.A.**

**F-21260 Selongey(FR)**

(72) Inventeur: **Schwob, Pierre**
**55 avenue des Frères Lumière**
**F-69008 N Lyon(FR)**

(72) Inventeur: **Debourg, Jean-Pierre**
**324 avenue Berthelot Allée B**
**F-69008 Lyon(FR)**

(74) Mandataire: **Bouju, André**
**38 Avenue de la Grande Armée**
**F-75017 Paris(FR)**

(54) **Dispositif pour assainir l'air dans un local et appareil de chauffage ou de traitement de l'air comportant un tel dispositif.**

(57) Le dispositif est destiné à assainir l'air dans un local.
Il comprend un élément (1) en matière conductrice de la chaleur, présentant une surface recouverte par un catalyseur d'oxydation pulvérulent, une résistance de chauffage électrique pour chauffer le catalyseur à sa température d'efficacité optimale et un support (2) pour maintenir ladite surface.
Utilisation notamment pour éliminer les mauvaises odeurs et les gaz nocifs contenus dans un local.

EP 0 170 567 A1

./...

Croydon Printing Company Ltd.

FIG. 2

La présente invention concerne un dispositif pour assainir l'air dans un local, notamment d'habitation, c'est-à-dire débarrasser ce local des gaz et odeurs nocives tels que ceux provoqués par les fumées de tabac, les vapeurs de cuisson et autres.

L'invention vise également un appareil de chauffage électrique ou de traitement de l'air comportant un tel dispositif.

De nombreuses solutions ont été proposées pour assainir les locaux d'habitation.

Selon une première solution connue, on élimine les gaz nocifs et les mauvaises odeurs, au moyen d'extracteurs d'air ou de dispositifs de recyclage d'air munis de filtres absorbants.

Ces dispositifs présentent les deux inconvénients suivants :

- ils sont nécessairement bruyants car ils sont motorisés et,

- l'efficacité de leur filtre diminue avec le temps, de sorte que celui-ci doit être changé périodiquement.

Selon une seconde solution connue, on masque les mauvaises odeurs en diffusant dans le local une odeur plus agréable. Cette solution n'est pas parfaite car l'odeur plus agréable diffusée dans l'atmosphère ne convient pas nécessairement à tout le monde.

De plus, les mauvaises odeurs nocives ne sont pas éliminées, de sorte que les inconvénients dûs à celles-ci ne sont pas éliminés.

Selon une troisième solution connue, on détruit les mauvaises odeurs qui sont principalement dûes à des substances organiques en oxydant ces dernières pour les transformer en gaz non nocifs et dépourvus d'odeurs, tels que le gaz carbonique et la vapeur d'eau.

Cette oxydation peut être réalisée par la flamme d'une bougie, par combustion catalytique d'alcool (lampe type BERGER) ou en produisant de l'ozone.

2

L'efficacité de la bougie est assez bonne, mais la flamme de celle-ci peut être dangereuse dans un local d'habitation et nécessite donc une surveillance attentive. L'utilisateur doit également penser à remplacer périodiquement la bougie.

La combusion catalytique à l'alcool présente également l'inconvénient de veiller à l'approvisionnement en alcool. De plus, cette combustion est incomplète, de sorte que l'appareil en question émet dans le local des vapeurs d'alcool odorantes. De plus, l'allumage de cet appareil est délicat.

Par ailleurs, les appareils produisant de l'ozone sont d'un usage limité car l'ozone est dangereux à forte dose.

Le but de la présente invention est de remédier aux inconvénients des réalisations connues en créant un dispositif d'assainissement efficace, fonctionnant sans bruit, sans combustible et ne nécessitant aucun entretien.

Suivant l'invention, ce dispositif est caractérisé en ce qu'il comprend un élément en matière conductrice de la chaleur présentant une surface recouverte par un catalyseur d'oxydation pulvérulent, une résistance de chauffage électrique pour chauffer le catalyseur à sa température efficacité optimale et un support pour maintenir cette surface.

Le chauffage de cette surface provoque un courant d'air de convection qui lèche cette surface. Au contact du catalyseur recouvrant cette surface, les molécules de substances organiques contenues dans le courant d'air sont oxydées et transformées principalement en gaz carbonique et en vapeur d'eau dépourvus de toute odeur et nocivité.

Le dispositif permet ainsi de détruire les mauvaises odeurs et vapeurs nocives contenues dans un local d'habitation ou autre.

Les principaux avantages de ce dispositif sont les suivants :

Il ne nécessite aucun entretien, ni aucun approvisionnement en combustible.

Le dispositif n'engendre aucune combustion secondaire susceptible de produire des composés autres que ceux formés par oxydation et destruction des molécules gazeuses.

De plus, étant donné que le dispositif ne comporte aucun moteur, son fonctionnement est absolument silencieux. Par ailleurs, il est absolument sans danger étant donné qu'il n'engendre aucune flamme.

Selon une version avantageuse de l'invention, le catalyseur pulvérulent est fixé à la surface de l'élément au moyen d'un liant poreux, résistant à la température de chauffage de cet élément.

Ainsi, l'air ambiant peut pénétrer dans les pores du liant pour entrer en contact avec le catalyseur pulvérulent.

Ce liant poreux est de préférence une barbotine de poudre d'émail à base d'alumine dont la température de frittage est supérieure à la température de chauffage de l'élément.

Ainsi, cet émail ne fritte pas lors du chauffage de l'élément, de sorte qu'il reste poreux.

Le catalyseur est de préférence une poudre de bioxyde de manganèse et d'oxyde cuivrique, telle que celle connue sous le nom d'hopcalite.

Selon un autre aspect, l'invention vise également un appareil de chauffage ou de traitement de l'air comportant des résistances électriques de chauffage situées entre une entrée d'air froid et une sortie d'air chaud et comprenant un dispositif d'assainissement conforme à l'invention. De préférence les résistances électriques de chauffage de cet appareil sont situées entre deux plaques verticales recouvertes sur leurs faces extérieures par un catalyseur d'oxydation.

Un tel appareil, tout en assurant le chauffage du local dans lequel il est disposé, assure en même temps l'assainissement de l'air qu'il contient.

D'autres particularités et avantages de l'invention apparaîtront encore dans la description ci-après.

Aux dessins annexés donnés à titre d'exemples non limitatifs :

- la figure 1 est une vue en bout d'un dispositif d'assainissement conforme à l'invention,

- la figure 2 est une vue en coupe suivant II-II de la figure 1,

- la figure 3 est une vue en perspective de l'élément actif du dispositif, séparé de son socle,

- la figure 4 est une vue partielle à plus grande échelle et avec arrachement de l'élément représenté sur la figure 3,

- la figure 5 est une vue agrandie du détail V de la figure 4,

- la figure 6 est une vue partielle de la plaque portant la résistance chauffante montrant le raccordement avec l'un de ses fils de connection,

- la figure 7 est une vue en perspective avec coupe transversale d'un appareil de chauffage équipé d'un dispositif conforme à l'invention,

- la figure 8 est une vue en coupe longitudinale d'un autre appareil de traitement d'air équipé d'un dispositif conforme à l'invention,

- la figure 9 est une vue en coupe d'un autre appareil de chauffage équipé d'un dispositif conforme à l'invention.

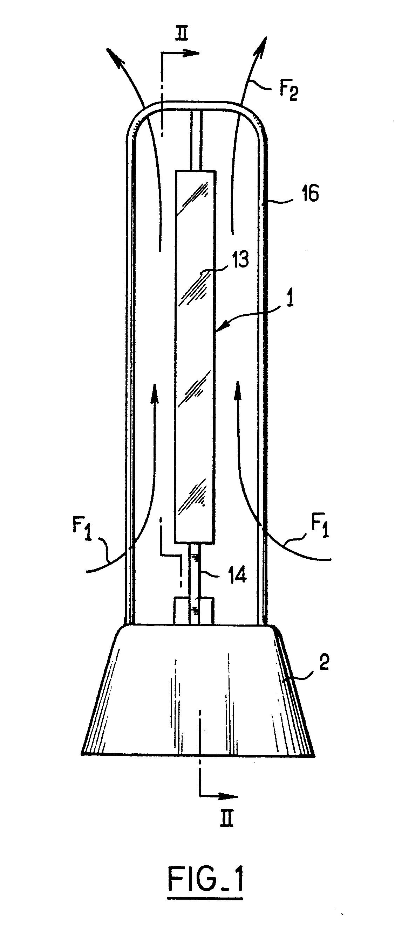

Dans la réalisation des figures 1 à 6, le dispositif pour assainir l'air d'un local, notamment d'habitation, comprend un élément actif 1 parallélépipédique,

fixé de façon sensiblement verticale sur un socle 2.

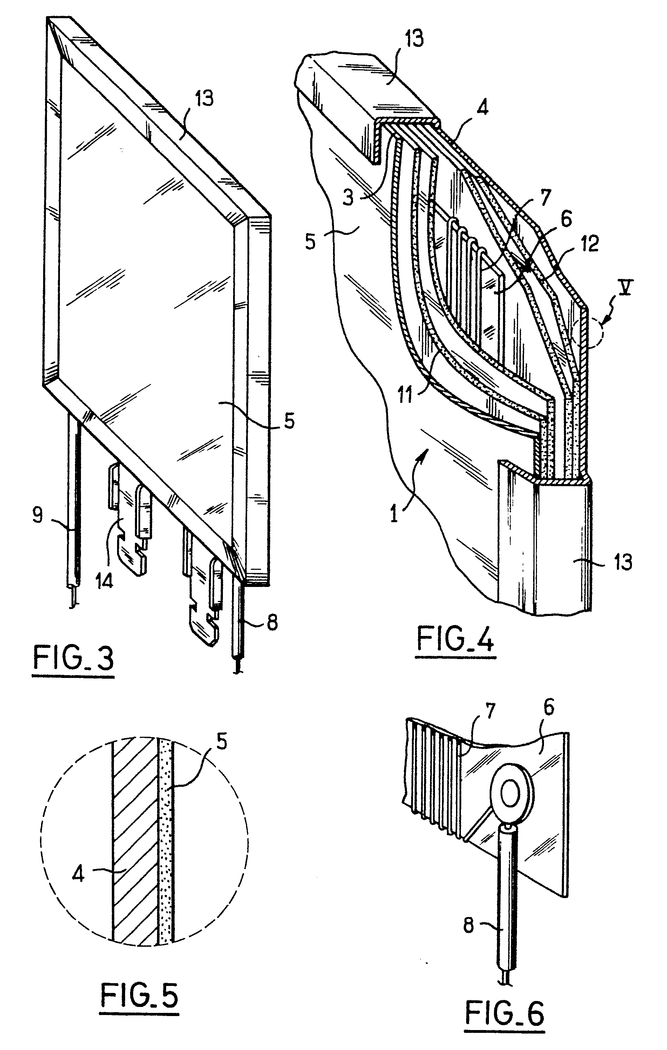

L'élément actif 1 comprend deux plaques espacées 3, 4 (voir figure 4) sensiblement parallèles, en tôle d'acier ou toute autre matière conductrice de la chaleur, recouverte sur la face extérieure d'une couche 5 (voir figure 5) renfermant un catalyseur d'oxydation pulvérulent.

Entre ces deux plaques 3, 4 est disposée une plaque 6 en matière électriquement isolante telle que du mica, autour de laquelle est enroulée une résistance électrique de chauffage 7. Cette résistance électrique 7 est reliée à deux fils de connection 8, 9 qui débouchent au bord inférieur de l'élément 1 et pénètrent dans le socle 2 dans lequel ils sont reliés au cordon d'alimentation 10 (voir figure 1).

La plaque isolante 6 portant la résistance chauffante 7 est séparée des plaques extérieures 3, 4 en tôle par plusieurs plaques telles que 11, 12 en matière isolante. La puissance de la résistance est déterminée pour limiter l'échauffement de la couche 5 renfermant le catalyseur à une température de l'ordre de 250 à 300°C.

Le catalyseur contenu dans la couche 5 est de préférence constitué par un mélange pulvérulent composé par exemple de 40% en poids de $MnO_2$ et 10% en poids de CuO, tel que commercialisé sous le nom d'hopcalite.

L'une des difficultés majeures rencontrées dans la présente invention a été de fixer cette poudre d'oxydes métalliques sur la surface des plaques 3 et 4 d'une manière telle que la couche 5 adhère suffisamment à ces surfaces, à une température comprise entre 250 et 300°C, tout en étant suffisamment poreuse pour permettre à l'air ambiant de pénétrer dans cette couche.

Cette difficulté a été surmontée en utilisant une composition d'émail non cuite, restant par conséquent poreuse.

Cette composition est appliquée sur la surface des plaques 3 et 4, sous la forme d'une barbotine de particules d'émail à base d'alumine, mélangée avec de la poudre

de $MnO_2$ et de $CuO$ à raison de 50% en volume environ de poudre d'émail et 50% en volume de $MnO_2$ et de $CuO$.

La composition de cet émail est telle que les particules qu'elle renferme ne frittent pas entre elles à la température de chauffage comprise entre 250°C et 300°C, de façon que la couche 5 reste poreuse.

La composition de cet émail est proche de celle utilisée pour revêtir l'intérieur des fours de cuisson dit "à catalyse" au moins pour ce qui est des composants agissant sur l'adhérence de l'émail aux parois.

L'expérience a montré que la couche 5 obtenue après séchage de la barbotine d'émail était suffisamment adhérente et poreuse pour permettre aux molécules de substances organiques contenues dans l'air ambiant de pénétrer à l'intérieur de la couche 5 et entrer en contact avec le catalyseur constitué par le mélange de $MnO_2$ et de $CuO$.

L'épaisseur de la couche 5 est supérieure à l'épaisseur habituelle des couches d'émail, soit quelques dixièmes de millimètres.

La surface active des plaques 3 et 4 peut varier entre une dizaine de centimètres carrés et plusieurs dizaines de décimètres carrés, suivant le volume du local à assainir.

Dans l'exemple représenté sur les figures 1 à 4, l'ensemble des plaques 3, 4, 6, 11 et 12 est fixé dans un cadre périphérique 13 rectangulaire, et de section transversale en U dont les ailes recouvrent le bord des plaques extérieures 3 et 4 portant la couche 5 qui renferme le catalyseur.

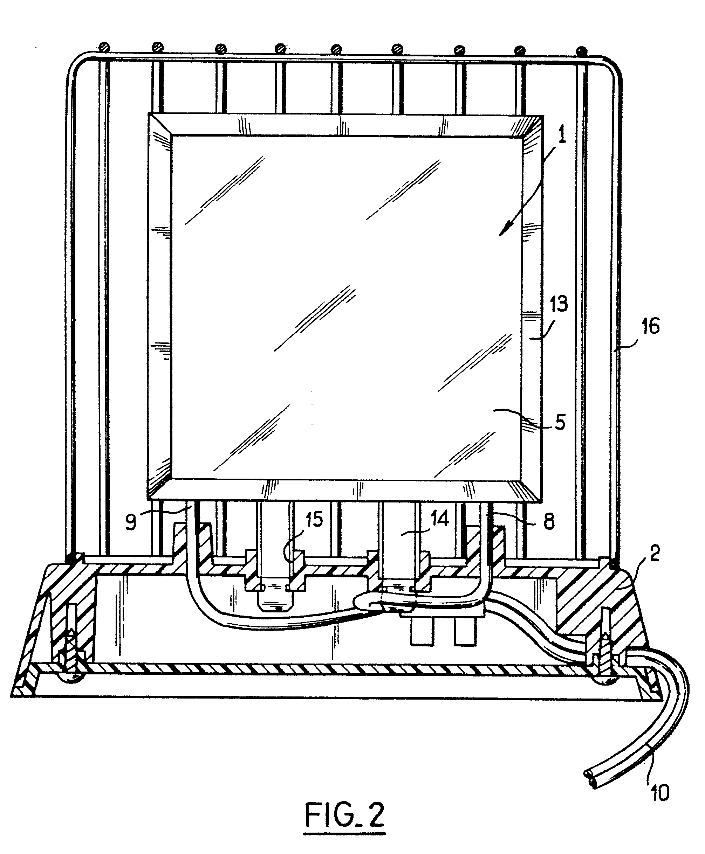

On voit de plus sur les figures 2 et 3 que la partie inférieure du cadre 13 porte deux pattes 14 engagées et verrouillées par encliquetage dans des fentes 15 ménagées dans le socle 2.

Par ailleurs, l'élément 1 est entouré de toutes parts par une grille 16 ou tout autre dispositif de protection qui protège la couche 5 à base d'émail non fritté renfermant le catalyseur et qui recouvre les plaques 3 et 4, contre les chocs et évite que l'utilisateur se brûle en touchant l'élément 1 chauffé à haute température.

L'utilisation et le fonctionnement du dispositif qu'on vient de décrire sont très simples. Il suffit en effet de mettre en route l'alimentation électrique du dispositif. La température de chauffage s'élève rapidement et se stabilise à 250-300°C.

Du fait de ce chauffage et de la disposition verticale de l'élément 1, il se crée de part et d'autre de ce dernier, suivant la hauteur des plaques 3 et 4, des courants d'air de convection ascendants qui lèchent toute la surface de ces plaques.

Ces courants d'air de convection aspirent vers la base des plaques 3 et 4, de l'air froid (voir flèches $F_1$ de la figure 1) chargé des substances organiques responsables de la mauvaise odeur que l'on veut supprimer.

Cet air froid est amené en contact avec la poudre de $MnO_2$ et de $CuO$ contenue dans la couche 5 en pénétrant dans les pores de celle-ci.

Sous l'action combinée de la température et de l'effet catalytique exercé par la poudre de $MnO_2$ et de $CuO$, les molécules de substances organiques contenues dans l'air, amenées au contact de cette poudre, sont oxydées et décomposées essentiellement en gaz carbonique et en vapeur d'eau.

L'air ainsi chauffé et traité est refoulé vers le haut (voir flèches $F_2$ de la figure 1).

Etant donné que le processus que l'on vient d'expliquer est continu, le dispositif permet de détruire presque complètement les mauvaises odeurs contenues dans le local.

La vitesse de ce processus dépend de la surface active de l'élément 1 et du volume du local à traiter.

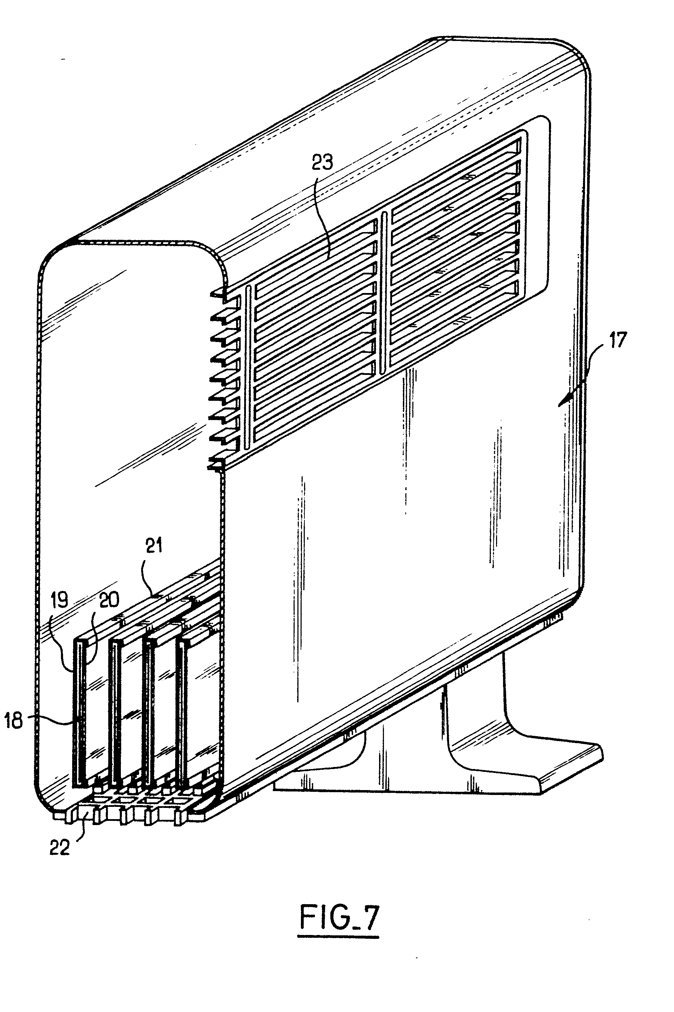

Le dispositif conforme à l'invention peut également être intégré à demeure dans un appareil de chauffage électrique tel que le convecteur 17 représenté sur la figure 7.

On voit sur cette figure que les éléments électriques de chauffage 18 en forme de lamelles sont situés entre deux plaques 19, 20 entourées par un cadre 21. Ces plaques 19, 20 s'étendent au-dessus de l'ouverture 22 d'entrée d'air froid située à la base du convecteur 17. La largeur de ces plaques 19, 20 est perpendiculaire à cette ouverture 22, de sorte que la disposition de ces plaques est verticale.

Les plaques 19, 20 sont, comme dans le cas de la réalisation des figures 1 à 6, recouvertes par une couche d'émail poreux renfermant un catalyseur d'oxydation pulvérulent.

Ces plaques 19, 20 sont ainsi placées sur la trajectoire de la circulation de l'air entre l'entrée d'air froid 22 et la sortie d'air chaud 23 de l'appareil.

Ainsi, cet appareil de chauffage, tout en chauffant le local, détruit les mauvaises odeurs contenues dans celui-ci.

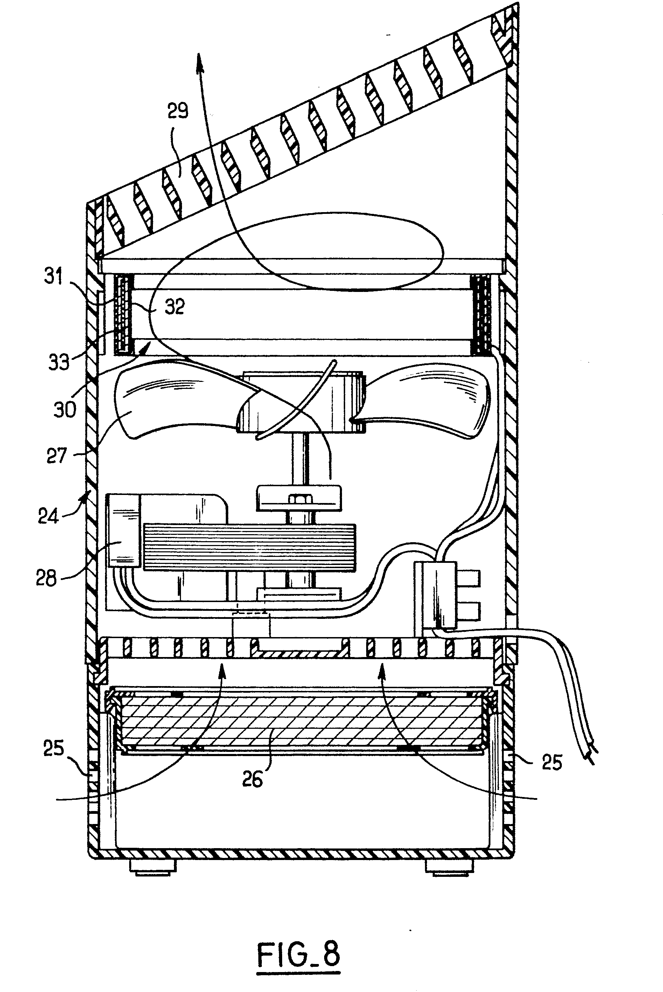

Dans la réalisation de la figure 8, l'appareil de traitement de l'air 24 comprend à sa base, une entrée d'air froid 25 surmontée par un filtre 26 puis par un ventilateur 27 monté sur un axe vertical entraîné en rotation par un moteur électrique 28. Entre le ventilateur 27 et la sortie d'air 29 est placé un dispositif 30 d'assainissement conforme à l'invention.

Ce dispositif 30 est constitué par un élément annulaire coaxial avec le ventilateur 27 comprenant deux lamelles parallèles 31, 32 enroulées suivant un cylindre et entre lesquelles est intercalé un élément chauffant 33.

Les lamelles 31, 32 sont revêtues extérieurement par une couche renfermant un catalyseur d'oxydation pulvérulent.

L'air froid aspiré à la base de l'appareil traverse le filtre 26 qui débarrasse l'air des poussières
et d'une partie des mauvaises odeurs, puis arrive au contact
de l'élément 30 qui détruit par oxydation les mauvaises
odeurs restantes, de sorte que l'air sortant en haut de
l'appareil est sensiblement exempt de mauvaises odeurs.
Dans cet appareil qui chauffe peu, la convection est accélérée par le mouvement de l'hélice.

Bien entendu, l'invention n'est pas limitée
aux exemples que l'on vient de décrire et on peut apporter
à ceux-ci de nombreuses modifications sans sortir du cadre
de l'invention.

Ainsi, la forme de l'élément 1 peut être différente de celle représentée, pourvu qu'elle présente
une surface pouvant être exposée à l'air ambiant et favorisant la circulation de cet air par convection naturelle
ou forcée pour un appareil de chauffage soufflant ou un
appareil à filtre avec perte de charge.

Par ailleurs, dans le cas de l'appareil de traitement de l'air représenté sur la figure 8, la disposition
verticale du dispositif d'assainissement 30 en aval de
l'hélice 27 n'est pas critique. En effet, ce dispositif
d'assainissement peut être constitué par des éléments
horizontaux revêtus de catalyseur placés en amont ou en
aval de l'hélice, entre l'entrée et la sortie de l'air,
ces éléments étant disposés de façon à créer une perte
de charge par rapport au courant d'air engendré par l'hélice. L'essentiel est de créer un courant d'air par convection naturelle ou forcé qui lèche la surface des éléments
ou plaques revêtues de catalyseur.

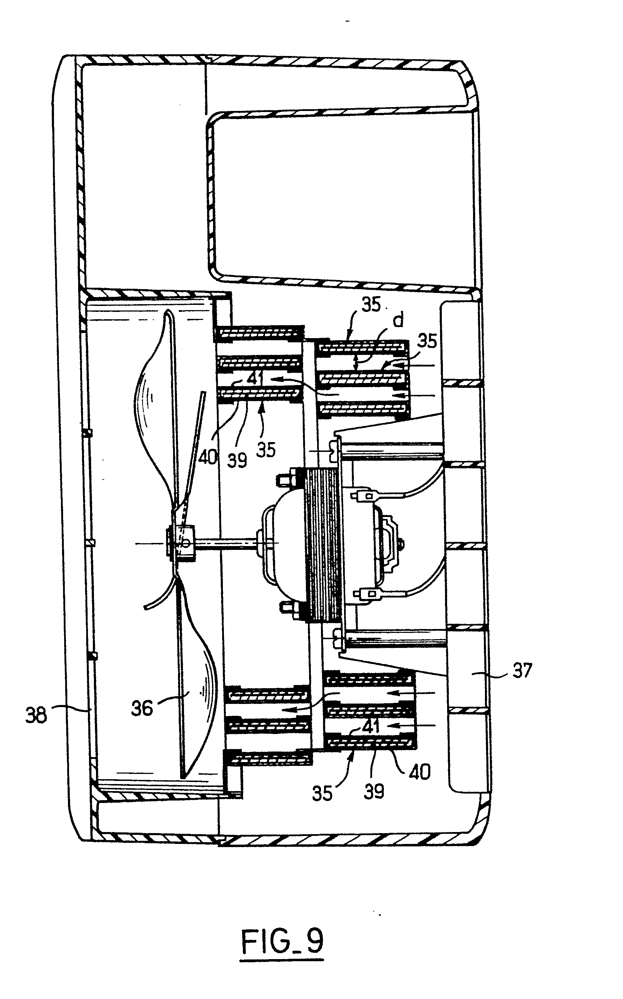

Dans le cas de l'appareil de chauffage représenté
sur la figure 9, les éléments chauffants 35 sont disposés
annulairement autour de l'axe de rotation de l'hélice 36.

Ces éléments chauffants 35 comprennent une résistance 39 située entre deux lames 40, 41 revêtues d'une couche de catalyseur. Ils sont placés entre l'entrée 37 et l'hélice 36 qui est elle-même en amont de la sortie d'air chaud 38. La distance $d$ comprise entre les éléments 35 est relativement faible de façon à créer une perte de charge pour la circulation de l'air. Cette perte de charge est augmentée en plaçant deux séries d'éléments concentriques 35 l'une à côté de l'autre, avec un décalage radial des éléments de l'une des séries par rapport aux éléments de l'autre série, de façon à créer des chicanes.

REVENDICATIONS

1. Dispositif pour assainir l'air dans un local, notamment d'habitation, caractérisé en ce qu'il comprend un élément (1) en matière conductrice de la chaleur, présentant une surface (3, 4) recouverte par un catalyseur (5) d'oxydation pulvérulent, une résistance de chauffage électrique (7) pour chauffer le catalyseur (5) à sa température d'efficacité optimale et un support (2) pour maintenir ladite surface.

2. Dispositif conforme à la revendication 1, caractérisé en ce que le catalyseur pulvérulent est fixé à la surface (3, 4) au moyen d'un liant poreux résistant à ladite température de chauffage.

3. Dispositif conforme à l'une des revendications 1 ou 2, caractérisé en ce que le catalyseur est une poudre de bioxyde de manganèse et d'oxyde cuivrique.

4. Dispositif conforme à l'une des revendications 2 ou 3, caractérisé en ce que le liant poreux est une barbotine de poudre d'émail à base d'alumine dont la température de frittage est supérieure à ladite température de chauffage.

5. Dispositif conforme à l'une des revendications 1 à 4, caractérisé en ce que l'élément est une plaque en tôle d'acier (3, 4).

6. Dispositif conforme à l'une des revendications 1 à 5, caractérisé en ce qu'il comprend deux plaques (3, 4) espacées et sensiblement parallèles, recouvertes sur leur face extérieure par ledit catalyseur (5) et en ce que la résistance électrique de chauffage (7) est disposée entre ces deux plaques.

7. Dispositif conforme à la revendication 6, caractérisé en ce que la résistance électrique (7) est un fil électriquement résistant enroulé sur une plaque isolante (6), en ce que cette plaque est séparée des plaques (3, 4) recouvertes de catalyseur par une ou plusieurs plaques isolantes (11, 12) et en ce que l'ensemble de ces plaques est fixé dans un cadre périphérique (13) de section transversale en U dont les ailes recouvrent le bord des plaques extérieures (3, 4) portant le catalyseur.

8. Dispositif conforme à la revendication 7, caractérisé en ce que le cadre (13) maintenant l'ensemble des plaques, est fixé verticalement sur un socle (2).

9. Dispositif conforme à la revendication 8, caractérisé en ce qu'un grillage (16) est fixé sur le socle (2), de part et d'autre du cadre (13) maintenant les plaques, de façon à protéger les plaques (3, 4) revêtues de catalyseur.

10. Appareil de chauffage comportant des résistances électriques de chauffage situées entre une entrée d'air froid (22), (37) et une sortie d'air chaud (23), (38) et comprenant un dispositif d'assainissement conforme à l'une des revendications 1 à 7, caractérisé en ce que les résistances électriques de chauffage (18), (39) de l'appareil sont situées entre deux plaques ou lames (19, 20); (40, 41) recouvertes sur leur face extérieure par un catalyseur d'oxydation.

11. Appareil de chauffage conforme à la revendication 10, caractérisé en ce qu'il comprend une hélice (36) pour créer une circulation d'air entre l'entrée (37) et la sortie (38) passant entre les éléments chauffants (35).

12. Appareil de traitement de l'air comprenant un ventilateur (2⁻) pour faire circuler l'air entre l'entrée (25) et la sortie (29) de l'appareil, et un dispositif d'assainissement conforme à l'une des revendications 1 à 7, caractérisé en ce que ce dispositif (30) d'assainissement est placé entre le ventilateur (27) et la sortie d'air (29).

FIG_1

FIG. 2

FIG.3

FIG.4

FIG.5

FIG.6

0170567

FIG_7

FIG_8

FIG_9

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | GB-A-2 105 212 (DOMNICK JUNTER FILTERS)<br>* Figures 1,2; page 2, ligne 89 - page 4, ligne 5 * | 1,3 | B 01 D 53/36 |
| A | US-A-4 277 442 (P.A. HERGART)<br>* Figure 3; colonne 3, ligne 15 - colonne 4, ligne 57 * | 1 | |
| A | FR-A-2 265 448 (U.K. ATOMIC ENERGY AUTHORITY)<br>* Figure 5; page 10, ligne 26 - page 11, ligne 37; pages 12,13 * | 1,2,5 | |
| A | FR-A-1 360 560 (W.R. GRACE) | | DOMAINES TECHNIQUES RECHERCHES (Int Cl 4) |
| A | DE-A-2 149 989 (MITSUI MINING & SMELTING) | | B 01 D 53/00 |

Le present rapport de recherche a ete etabli pour toutes les revendications

| Lieu de la recherche | Date d achevement de la recherche | Examinateur |
|---|---|---|
| LA HAYE | 18-10-1985 | BOGAERTS M.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant